**Europäisches Patentamt**

**European Patent Office**

**Office européen des brevets**

(19)

(11) **EP 1 182 300 A1**

(12) **EUROPÄISCHE PATENTANMELDUNG**

(43) Veröffentlichungstag:
**27.02.2002 Patentblatt 2002/09**

(51) Int Cl.$^7$: **E02D 33/00**, G01M 7/00

(21) Anmeldenummer: **00118055.3**

(22) Anmeldetag: **23.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Gerling-Konzern, Globale Rückversicherungs-AG**
**50597 Köln (DE)**

(72) Erfinder:
• **Meskouris, Konstantin, Prof.-Dr.**
**52477 Alsdorf (DE)**

• **Sadegh-Azar, Hamid**
**52457 Aldenhoven (DE)**
• **Berezowsky, Michel**
**51143 Köln (DE)**
• **Dümling, Holger, Dr.**
**50996 Köln (DE)**
• **Frenzel, Rüdiger**
**53773 Hennef (DE)**

(74) Vertreter:
**von Kirschbaum, Alexander, Dipl.-Ing. et al**
**Patentanwälte von Kreisler Selting Werner**
**Deichmannhaus am Dom Postfach 10 22 41**
**50462 Köln (DE)**

(54) **Verfahren zur Bestimmung der Erdbebensicherheit von Bauwerken**

(57) Bei dem Verfahren zur Bestimmung der Erdbebensicherheit von Bauwerken wird erfindungsgemäß die Eigenfrequenz des Bauwerks bestimmt. Ferner wird die Eigenfrequenz des das Bauwerk umgebenden Bodens bestimmt. Anschließend wird eine Bewertungsgröße für das Bauwerk auf Grundlage eines Vergleichs der Bauwerkseigenfrequenz mit der Bodeneigenfrequenz berechnet. Auf Grundlage dieser Bewertungsgröße kann eine Erdbebensicherheit eines Bauwerks bestimmt werden. Vorzugsweise wird auf Grundlage der Bewertungsgröße eine Versagungswahrscheinlichkeit des Bauwerks sowie eine mittlere Schädigung des Bauwerks in Abhängigkeit der Stärke des Erdbebens berechnet.

a) | Eingabe / Abfrage bauwerksspezifischer Daten |

b) | Eingabe / Abfrage bodenspezifischer Daten |

c) | Ermittlung der Bauwerkseigenfrequenz |

d) | Ermittlung der Bodeneigenfrequenz |

e) | Auswertung der Eigenfrequenzen |

f) | Berechnung der Erdbebenersatzkräfte |

g) | Berechnung der Kippsicherheit |

FIG. 1 a

EP 1 182 300 A1

Printed by Jouve, 75001 PARIS (FR)

**Beschreibung**

Die Erfindung betrifft ein Verfahren zur Bestimmung der Erdbebensicherheit von Bauwerken.

Insbesondere bei Bauwerken, die in erdbebengefährdeten Gebieten stehen, ist das Einhalten von speziellen für dieses Gebiet vorgeschriebenen Bauvorschriften wichtig, um ein Beschädigen des Bauwerks bei einem Erdbeben zu vermeiden. Derartige Bauvorschriften werden jedoch aus Kostengründen häufig nicht eingehalten, so dass bei einem Erdbeben ein großer wirtschaftlicher Schaden entsteht. Ferner kommen aufgrund von Baumängeln eine große Anzahl Menschen ums Leben.

Zur Beurteilung der Sicherheit von Bauwerken im Erdbebenfall wird derzeit lediglich eine Sichtprüfung durchgeführt. Eine Vielzahl von Mängeln, wie beispielsweise die Qualität der verwendeten Materialien und dgl. können hierbei jedoch nicht überprüft werden. Aufgrund derartiger Sichtprüfungen lassen sich nur gravierende Mängel feststellen. Der entstehende wirtschaftliche Schaden an einem Bauwerk ist hierdurch nicht abschätzbar.

Ein weiteres Problem beim Bestimmen der im Erdbebenfall auftretenden Schäden ist, dass nur großflächige Landkarten mit Erdbebenzonen existieren. Diese Landkarten sind aus Erfahrungen früherer Erdbeben sowie aufgrund geologischer Untersuchungen erstellt. Auf den Landkarten sind aufgrund der Großflächigkeit der einzelnen Erdbebengebiete stets nur Mittelwerte für Gebiete mehrerer 1000 km$^2$ angegeben. Der Untergrund ist jedoch in derartig großen Gebieten nicht homogen, sondern ändert sich häufig. Bereits geringfügige Änderungen des Untergrunds, wie beispielsweise eine weiche Zwischenschicht kann das Verhalten des Untergrundes bei einem Erdbeben grundlegend verändern. Diese Verhaltensveränderung des Untergrunds gegenüber dem in der Karte angegebenen Mittelwert kann so gravierend sein, dass eine Abschätzung von dem Grad der Schädigung eines Bauwerks bei einem Erdbeben bestimmter Stärke nicht möglich ist.

Aufgabe der Erfindung ist es, ein Verfahren zur Bestimmung der Erdbebensicherheit von Bauwerken zu schaffen, mit dem der zu erwartende Schaden an einem Bauwerk im Erdbebenfall besser bestimmbar ist.

Die Lösung der Aufgabe erfolgt erfindungsgemäß durch die Merkmale des Anspruchs 1.

Bei dem erfindungsgemäßen Verfahren wird die Eigenfrequenz des Bauwerks bestimmt. Die Eigenfrequenz des Bauwerks ist die kleinste Frequenz, in der sich das Bauwerk bei freier Schwingung bewegt. Erfindungsgemäß wird ferner die Eigenfrequenz des Bodens bestimmt. Anschließend wird eine Bewertungsgröße für das Bauwerk auf Grundlage eines Vergleichs der Bauwerkseigenfrequenz mit der Bodeneigenfrequenz berechnet. Die Bewertungsgröße steht im unmittelbaren Zusammenhang mit einem zu erwartenden Schaden bei einem Erdbeben bestimmter Stärke. Aufgrund der Bewertungsgröße lässt sich somit eine zu erwartende Schädigung des Bauwerks vorhersagen.

Die Bestimmung der Eigenfrequenz des Gebäudes hat den Vorteil, dass unabhängig von Bauvorschriften und der Frage inwieweit diese auch umgesetzt wurden, eine tatsächliche bauwerksspezifische Messgröße ermittelt wird. Diese Messgröße dient als Grundlage des erfindungsgemäßen Verfahrens.

Die Eigenfrequenz des Bodens wird entweder dadurch bestimmt, dass sie einer Tabelle entnommen wird. Bei derartigen Tabellen handelt es sich um die mit entsprechenden Landkarten korrespondierenden Tabellen, in denen die Eigenfrequenzen des Bodens bezogen auf große Erdbebengebiete festgehalten sind. Obwohl diese Eigenfrequenz einen Mittelwert über ein großes Gebiet darstellt und keine charakteristische Größe für den das Bauwerk umgebende Boden ist, kann durch einen Vergleich dieser beiden Frequenzen bereits eine Bewertungsgröße ermittelt werden, durch die eine erheblich exaktere Vorhersage über die zu erwartende Schädigung eines Bauwerks möglich ist, als durch eine reine Sichtprüfung.

Die Eigenfrequenz des Bodens wird vorzugsweise nach der Nakamura-Methode ermittelt, durch die eine genauere standortspezifische Bodeneigenfrequenz ermittelt werden kann. Bei der Nakamura-Methode wird zunächst das Spektrum der Horizontalkomponente und der Vertikalkomponente vorhandener Bodenschwingungen ermittelt. Aus dem Maximalwert der Division des Horizontal- und des Vertikalspektrums ergibt sich die Bodeneigenfrequenz.

Zur Bestimmung der Eigenfrequenz des Bauwerks wird vorzugsweise eine exzentrisch gelagerte Masse einer Erregungsvorrichtung mit zunehmender Drehzahl rotiert. Dadurch wird das Bauwerk zu Schwingungen angeregt. Die Schwingungen des Bauwerks werden mittels eines Beschleunigungsaufnehmers oder eines Geophons aufgenommen. Anschließend wird die Eigenfrequenz des Bauwerks anhand des aufgenommenen Schwingungsspektrums bestimmt. Es ist somit durch einfaches Beschleunigen einer Masse möglich ein Gebäude derart in Schwingungen zu versetzen, dass die Eigenfrequenz des Gebäudes ermittelt werden kann. Dieses Verfahren ist beispielsweise bei Gebäuden auch durchführbar, während das Gebäude bewohnt wird. Der Aufwand zur Ermittlung der Eigenfrequenz ist somit äußerst gering.

Vorzugsweise erfolgt die Ermittlung der Eigenfrequenz des Bauwerks durch eine Fouriertransformation des Zeitverhaltens des Bauwerks während dem Beschleunigen der Masse. Besonders gute Ergebnisse können erzielt werden, wenn die Erregungsvorrichtung oberhalb von $9/10$ der Gesamthöhe des Bauwerks an diesem befestigt wird. Vorzugsweise wird die Erregungsvorrichtung auf dem Dach des Bauwerks angeordnet.

Vorzugsweise erfolgt die Berechnung der Bewertungsgröße für das Bauwerk auf Grundlage einer bauwerksspezifischen Basispunktzahl. Hierzu ist in einem Computer eine Tabelle mit bauwerksspezifischen Basispunktzahlen in Form einer Datenbank abgespeichert. Zur Bestimmung der Bewertungsgröße muss vom Benutzer lediglich die Art des Bauwerks ausgewählt werden. Anschließend werden von dem Computer, der mit dem Beschleunigungsaufnehmer verbunden ist, automatisch die Schwingungen des Bauwerks aufgenommen. Aus diesen ermittelt der Computer vorzugsweise durch eine Fouriertransformation, wie vorstehend beschrieben, die Eigenfrequenz des Gebäudes. In einem weiterem Schritt wird von dem Computer mit Hilfe eines Beschleunigungsaufnehmers die Bodenbeschleunigung aufgenommen und in die Bodenfrequenz umgerechnet. Anstelle der Aufnahme der Bodeneigenfrequenz kann vom Computer auch aus einer hinterlegten Datei die mittlere Bodeneigenfrequenz eines großflächigen Gebietes entnommen werden. Anschließend entnimmt der Computer aus der hinterlegten Bauwerkstabelle die bauwerksspezifische Basispunktzahl. Durch Vergleich der beiden Eigenfrequenzen und unter entsprechender Berücksichtigung der Basispunktzahl wird die Bewertungsgröße ermittelt. Die Berücksichtigung der Basispunktzahl, die auf einer statistischen Auswertung der Erfahrungen und Untersuchungen beruhen, hat den Vorteil, dass der Bauwerkstyp berücksichtigt wird.

Insbesondere wird beim Berechnen der Bewertungsgröße der Abstand zwischen der Bauwerkseigenfrequenz und der Bodeneigenfrequenz berücksichtigt. Besonders bevorzugt ist es, die bauwerksspezifische Basispunktzahl um einen ebenfalls bauwerksspezifischen Frequenz-Risikowert zu verringern, wenn der Abstand der beiden Frequenzen eine festgelegte Grenze unterschreitet. Dies erfolgt durch folgende Gleichung:

$$\frac{\text{Bauwerkseigenfrequenz - Bodeneigenfrequenz}}{\text{Bauwerkseigenfrequenz}} \qquad \text{(Gl. 1)}$$

Wenn dieser Quotient kleiner als eine bauwerksspezifische Grenzzahl ist, wird die bauwerksspezifische Basispunktzahl um den Frequenz-Risikowert verringert. Somit ergibt sich bei einem geringen Abstand der beiden Eigenfrequenzen eine verringerte Bewertungsgröße. Dies hat zur Folge, dass das Bauwerk bereits bei einer geringeren Stärke des Erdbebens beschädigt wird und dies entsprechend durch das erfindungsgemäße Verfahren bestimmt werden kann.

Die bauwerksspezifische Basispunktzahl wird erfindungsgemäß in Abhängigkeit der Bodenbeschaffenheit um einen Boden-Risikowert verringert. Hierbei handelt es sich beispielsweise um Werte, die aus einer statistischen Auswertung der wissenschaftlichen Erfahrungen und Untersuchungen herrühren und beispielsweise Versetzungen im Boden, Zwischenschichten und dgl. berücksichtigen.

Eine weitere Veränderung der Basispunktzahl wird von dem Computer dann vorgenommen, wenn in Abhängigkeit von einer oder mehrerer Bauwerksüberprüfungsberechnungen Schwächungen oder Stärkungen des Bauwerks zu erwarten sind. Vorgenommene Bauwerksüberprüfungsberechnungen, die von dem Computer durchgeführt werden, sind später anhand der Zeichnungen näher erläutert. Vorzugsweise erfolgt die Berücksichtigung der Bauwerksüberprüfungsberechnung dadurch, dass jede Bauwerksüberprüfungsberechnung in Abhängigkeit eines Grenzwertes als positiv oder negativ von dem Computer bewertet wird. Die Basiszahl wird sodann erhöht, wenn alle Bauwerksüberprüfungsberechnungen als positiv bewertet wurden. Dies bedeutet vereinfacht gesagt, dass ein Gebäude wichtige Kriterien der Erdbebenormen einhält. Vorzugsweise erfolgt eine Erhöhung der Basispunktzahl nur dann, wenn zusätzliche Bauwerkskriterien, die zuvor festgelegt wurden, erfüllt sind.

Die erhaltene Bewertungsgröße wird vorzugsweise zur Berechnung einer mittleren Schadenswahrscheinlichkeit in Abhängigkeit der Erdbebenstärke verwendet. Die Berechnung ergibt somit das Ausmaß des Schadens in Abhängigkeit der Erdbebenstärke. Anhand dieses Grades kann auf einfache Weise abgeschätzt werden, mit welcher Schädigung des Gebäudes, bei einem Erdbeben bestimmter Stärke zu rechnen ist. Zusätzlich zum mittleren Schadensmaß (MDR) wird eine Versagungswahrscheinlichkeit, d. h. die Wahrscheinlichkeit, dass das Gebäude völlig zerstört wird, aufgrund der Bewertungsgröße berechnet. Auf diese Weise kann beispielsweise ermittelt werden, mit welcher Wahrscheinlichkeit bei einer bestimmten Erdbebenstärke mit dem Einsturz bzw. der vollständigen wirtschaftlichen Zerstörung des Gebäudes gerechnet werden muss.

Vorstehendes Verfahren zur Bestimmung der Erdbebensicherheit von Gebäuden ist insbesondere auch für Versicherungen geeignet. Mit Hilfe dieses Verfahrens ist es Versicherungen möglich den Schadensfall abzuschätzen und hieraus die Versicherungsbeiträge und dgl. zu berechnen.

Nachfolgend wird die Erfindung anhand einer bevorzugten Ausführungsform unter Bezugnahme auf die anliegenden Zeichnungen näher erläutert.

Es zeigen:

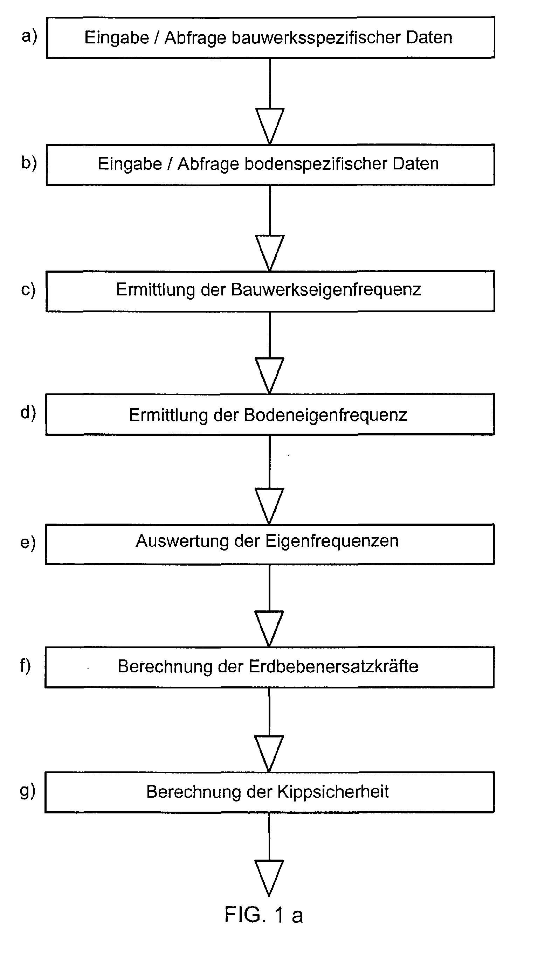

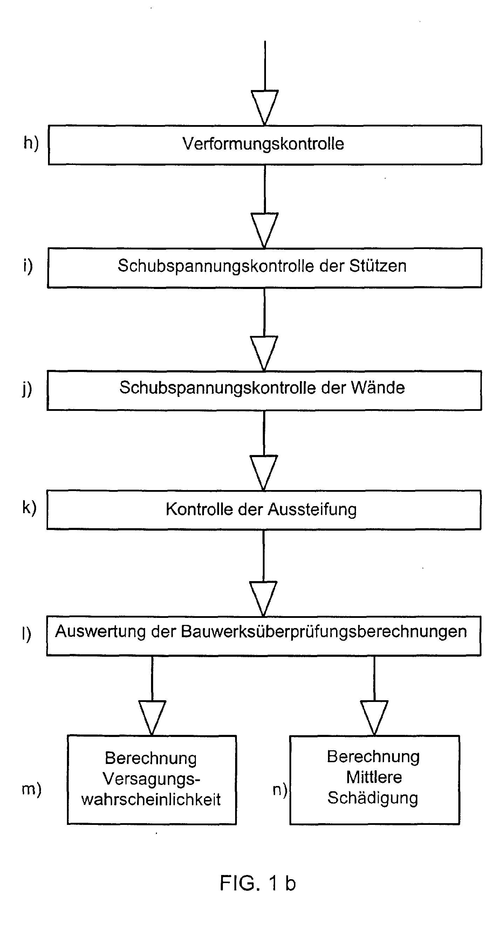

Fig. 1a und 1b    ein Flussdiagramm einer bevorzugten Ausführungsform des erfindungsgemäßen Verfahrens,

Fig. 2    ein Beispiel eines Diagramms der Beschleunigung über der Zeit sowie der daraus abgeleiteten Amplituden über der Frequenz bei einem durch die Erregungsvorrichtungen in Schwingung versetzten Bauwerk,

Fig. 3          eine schematische Darstellung zur Berechnung der Erdbebenersatzkräfte und

Fig. 4          eine schematische Darstellung zur Berechnung des Kippmoments des Bauwerks um das Fundament.

In Schritt a) werden zuerst bauwerksspezifische Daten wie die Adresse des Bauwerks, die genaue Position des Bauwerks ggf. mit GPS-Daten etc. eingegeben. Als nächstes wird der Bauwerkstyp eingegeben. Insgesamt sind in einer Datei des Computers, in dem die Daten eingegeben werden, 15 verschiedene Bauwerkstypen in einer Tabelle hinterlegt. Es handelt sich hierbei beispielsweise um Holz-, Stahl- oder Stahlbetonbauwerke unterschiedlichen Typs. Jedem Bauwerkstyp ist eine bauwerksspezifische Basispunktzahl zugeordnet. Die Basispunktzahl resultiert aus Erfahrungswerten von Geologen, Seismologen, Statikern und dgl. Sie stellt eine Art Grundfestigkeit des Bauwerks dar. Ausgehend von dieser Basispunktzahl wird die im Folgenden beschriebene Berechnung der Erdbebensicherheit von Bauwerken mit Hilfe eines Computers durchgeführt. Zur Eingabe der Basispunktzahl ist es lediglich erforderlich den Gebäudetyp und die standortspezifischen Daten auszuwählen, da die hierzu erforderliche Basispunktzahl in einer Datei des Computers hinterlegt ist.

Im Schritt b) werden bodenspezifische Daten in Form von Boden-Klassifizierungen eingegeben bzw. abgefragt. Es handelt sich hierbei um eine Beurteilung des Aufbaus der Bodenschicht, auf der sich das Bauwerk befindet. Insbesondere wird hierbei die Festigkeit und Mächtigkeit von Bodenschichten und Ähnlichem berücksichtigt. Derartige Daten sind beispielsweise aus geologischen Karten sowie aus früheren Untersuchungen in dem entsprechenden Gebiet bekannt. In Abhängigkeit der Bodenbeschaffenheit wird eine bodenspezifische Punktzahl ermittelt. Vorzugsweise ist in dem Computer wiederum eine Datei vorgesehen, in der einzelne Bodentypen aufgelistet sind, so dass lediglich der Bodentyp ausgewählt werden muss und der Computer automatisch einen Zahlenwert dem entsprechenden Bodentyp zuordnet. Dieser Zahlenwert wird sodann in der bevorzugten Ausführungsform des Verfahrens von der Basispunktzahl abgezogen. Bei einem für die Erdbebensicherheit des Bauwerks vorteilhaften Boden erfolgt keine Veränderung der Basispunktzahl. Gegebenenfalls kann auch eine Erhöhung der Basispunktzahl erfolgen, wenn der Boden beispielsweise die bei Erdbeben auftretenden Schwingungen stark dämpft.

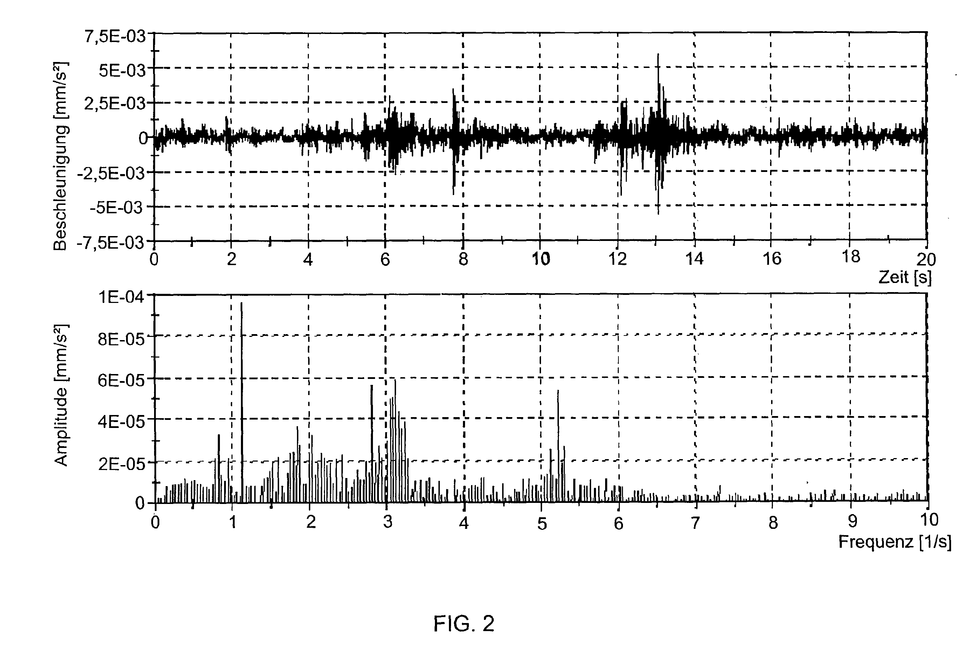

Im Schritt c) wird die Bauwerkseigenfrequenz ermittelt. Dies erfolgt, wie vorstehend beschrieben durch Befestigung einer Erregungsvorrichtung auf dem Dach oder in einem oberen Stockwerk des Gebäudes. Die Erregungsvorrichtung weist eine exzentrisch gelagerte Masse auf, die mit zunehmender Drehzahl in Rotation versetzt wird. Hierdurch wird das Bauwerk zu Schwingungen angeregt. Diese Schwingungen werden von einem Schwingungsaufnehmer oder einem Geophon gemessen. Die Messergebnisse werden automatisch an den Computer übermittelt. Es handelt sich bei den Messergebnissen um die Beschleunigung in Abhängigkeit der Zeit. Ein Beispiel einer derartigen Schwingungskurve ist in Fig. 2 in dem oberen Diagramm dargestellt. Mit Hilfe des Computers wird das Beschleunigungsdiagramm in ein Amplitudendiagramm überführt. Ein dem Beschleunigungsdiagramm in Fig. 2 entsprechendes Amplitudendiagramm ist in dem unteren Diagramm in Fig. 2 dargestellt. Die Umrechnung der Beschleunigungswerte in Amplitudenwerte erfolgt mit Hilfe einer Fouriertransformation. Dies erfolgt mit Hilfe der Gleichung

$$G(\omega) = \int_{-\infty}^{+\infty} g(t) \cdot e^{-i\omega t}\,dt \qquad\qquad (\text{Gl. } 2)$$

Hierbei zeigt $G(\omega)$ den Frequenzbereich und $g(t)$ die Funktion der Beschleunigung in Abhängigkeit der Zeit. Mit Hilfe dieser Transformation wird das Diagramm der Amplitude über der Frequenz entsprechend dem in Fig. 2 unterem Diagramm ermittelt. Aus diesem Diagramm ist die Eigenfrequenz des Bauwerks ersichtlich. Die Eigenfrequenz des Bauwerks ist diejenige Frequenz, mit der größten Amplitude. Im dargestellten Beispiel ist dies bei der Frequenz $f = 1{,}133$ Hz der Fall. Die Ermittlung der Eigenfrequenz erfolgt somit automatisch mit Hilfe einer Erregungsvorrichtung, eines Beschleunigungsaufnehmers und eines Computers.

Im Schritt d) wird die Bodeneigenfrequenz ermittelt. Wie vorstehend beschrieben, kann diese dem Computer in Form einer Tabelle hinterlegt sein, wobei in der Tabelle gebietsabhängige Eigenfrequenzen des Bodens aufgeführt sind. Da im Schritt a) der Standort des zu untersuchenden Bauwerks eingegeben wurde, kann der Computer in Schritt d) aus der entsprechenden Tabelle automatisch den entsprechenden Wert der Bodeneigenfrequenz entnehmen. Ein besseres Ergebnis kann dadurch erzielt werden, dass die Bodeneigenfrequenz ermittelt wird, da sodann die exakte Bodeneigenfrequenz an dem Standort des Gebäudes berücksichtigt wird. Bei bekannten Bodeneigenfrequenzen ist dies nicht der Fall, da diese lediglich für große Gebiete, d. h. in Form eines Mittelwerts vorliegen.

Die Ermittlung der Bodeneigenfrequenz ist durch einen Beschleunigungsaufnehmer oder vorzugsweise ein Geophon möglich, da der Boden aufgrund von mikroseismischen Bewegungen stets in Schwingungen versetzt wird. Die Ermittlung der Bodeneigenfrequenz erfolgt durch die Nakamura-Methode.

In dem nachfolgenden Schritt e) erfolgt eine Auswertung der Eigenfrequenzen, indem ein Vergleich zwischen der Bauwerkseigenfrequenz und der Bodeneigenfrequenz erfolgt. Hierzu wird folgende Berechnung durchgeführt:

$$\frac{\text{Bauwerkseigenfrequenz - Bodeneigenfrequenz}}{\text{Bauwerkseigenfrequenz}} \qquad (\text{Gl. 3})$$

Dieses Verhältnis wird mit einem bauwerksspezifischen Grenzwert verglichen. Dieser Grenzwert kann in Form einer Tabelle als Zahlenwert je Bauwerkstyp hinterlegt sein. Da sich dieser Gegenwert bei den unterschiedlichen Bauwerkstypen nur geringfügig unterscheidet, ist es möglich für sämtliche Bauwerke oder Gruppen von Bauwerken einen gemeinsamen, empirisch ermittelten Grenzwert zu hinterlegen. Wenn der in Gleichung 3 errechnete Wert kleiner als dieser ist, wird die bauwerksspezifische und standortspezifische Basisgröße automatisch um einen vorgegebenen Wert verringert. Bei dem erhaltenen Ergebnis handelt es sich um eine vorläufige Bewertungsgröße für die Erdbebensicherheit des Bauwerks. Bereits aus dieser Bewertungsgröße ließe sich eine deutlich genauere Abschätzung der Erdbebensicherheit des Gebäudes berechnen, als die durch bekannte Maßnahmen, wie durch eine Sichtprüfung möglich ist.

Im Schritt f) des erfindungsgemäßen Verfahrens werden Erdbebenersatzkräfte berechnet. Die Berechnung von Erdbebenersatzkräften ist für die nachfolgenden Schritte erforderlich. Die Berechnung der Erdbebenersatzkräfte erfolgt anhand des in dem Eurocode 8 (Auslegung von Bauwellen gegen Erdbeben DIN ENV, 1998; Teil 1, 2 § 3.3.2.2.) zugrundegelegten Berechnungsmethoden oder auf Basis der Berechnungsmethode in NEHRP (National Earthquake Hazard Reduction Program; 1988) Nach dem Eurocode 8 wird zunächst eine Gesamterdbebenkraft $F_b$ wie folgt berechnet:

$$F_b = S_d\,(T_1) \cdot W \qquad (\text{Gl. 4})$$

Hierin ist $S_d\,(T_1)$ die Ordinate des Bemessungsspektrums (Eurocode 8; Teil 1.1; § 4.2.4) bei einer Grundschwingzeit$(T_1)$,

$(T_1)$ die Grundschwingzeit des Bauwerks für die Translationsbewegung in der betrachteten Richtung und

W das Gesamtgewicht des Bauwerks.

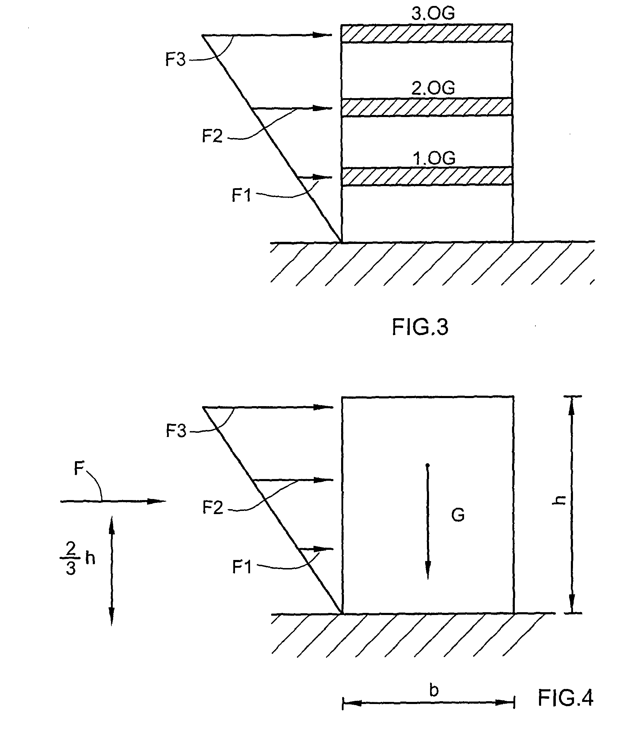

Anschließend werden die Erdbebenersatzkräfte $F_i$ berechnet. Es handelt sich hierbei beispielsweise um die Erdbebenersatzkräfte $F_1$, $F_2$ und $F_3$ (Fig. 3), die als Horizontalkräfte auf die einzelnen Stockwerke wirken. Die einzelnen Erdbebenersatzkräfte werden berechnet durch:

$$F_i = F_b \cdot \frac{Z_i \cdot W_i}{\sum Z_j \cdot W_j} \qquad (\text{Gl. 5})$$

Hierin sind $Z_i$, $Z_j$ die Höhen der Massen $m_i$, $m_j$ über der Ebene, in der die Erdbebeneinwirkung angreift (Gründung) und $W_i$, $W_j$ das Gewicht der einzelnen Massen $m_i$, $m_j$ ist.

Die Massen $m_i$, $m_j$ werden gemäß Eurocode; Teil 1, 2; § 3.1 berechnet.

Mit Hilfe dieser Berechnung werden somit die einzelnen auf die Stockwerke wirkenden Erdbebenersatzkräfte $F_1$, $F_2$, $F_3$ (Fig. 3) bestimmt.

In dem Schritt g) wird auf Grundlage der Erdbebenersatzkräfte die Kippsicherheit des Gebäudes berechnet (Fig. 4). Hierzu wird eine Ersatzkraft F der Kräfte $F_1$, $F_2$, $F_3$ auf $^2/_3$ der Gesamthöhe des Bauwerks angesetzt. Der Kippmoment $M_{kipp}$ wird berechnet durch:

$$M_{kipp} = F x \frac{2}{3} h \qquad (\text{Gl. 6})$$

Ferner wird für die Bestimmung der Kippsicherheit ein Widerstandsmoment $M_w$ des Gebäudes berechnet:

$$M_w = G \cdot \frac{b}{2} \qquad (\text{Gl. 7})$$

Hierin ist G das Gesamtgewicht des Gebäudes,

b die Breite des Gebäudes und

h die Höhe des Gebäudes.

Bei der Bestimmung der Lasten wird berücksichtigt, dass das Gebäude neben dem tatsächlichen Eigengewicht auch ein Verkehrsgewicht, d. h. Inventar und Personen aufweist. Das Kippmoment $M_{kipp}$ wird mit dem Widerstandsmoment $M_w$ verglichen. Aufgrund des Vergleichs wird die in Schritt g) durchgeführte Berechnung der Kippsicherheit als "positiv" oder "negativ" bewertet. Hierzu kann beispielsweise ein Verhältnis der beiden Momente mit einem bauwerksspezifischen Grenzwert verglichen werden.

Das Ergebnis der im Schritt g) durchgeführten Berechnung, d. h. die Bewertung "positiv" oder "negativ" wird zwischengespeichert.

In Schritt h) wird eine Verformungskontrolle durchgeführt. Hierzu werden die in jeder Stütze eines Gebäudes auftretenden Querkräfte berechnet, wobei die Querkraft in jeder Stütze der gesamten Stockwerksquerkraft, dividiert durch die Anzahl der Stützen in vereinfachter Näherung entspricht. Hieraus wird eine relative Stockwerkverschiebung in jedem Stockwerk berechnet durch:

$$V_c \cdot q_d \cdot \left(\frac{h}{12E}\right) \cdot \left(\frac{K_b + K_c}{K_b \cdot K_c}\right) \qquad \text{(Gl. 8)}$$

Hierin ist $V_c$ die Scherkraft in einer Stütze,

$q_d$ der Verhaltensbeiwert der Verschiebung,

h die Höhe der Etage,

E das Elastizitätsmodul

$K_b = \frac{I}{L}$ und $K_c = \frac{I}{h}$, wobei I das Trägheitsmoment und L die Länge des Riegels ist.

Das Ergebnis wird mit einer zulässigen Verformung verglichen. Der Vergleich führt in Abhängigkeit eines vorgegebenen bauwerksspezifischen Grenzwertes, der in einer entsprechenden Tabelle in dem Computer hinterlegt ist, zu der Bewertung "positiv" oder "negativ". Diese Bewertung wird wiederum zwischengespeichert.

In dem Schritt i) wird eine Schubspannungskontrolle in den Stützen durchgeführt. Hierzu wird aus der Querkraft in jeder In dem Schritt i) wird eine Schubspannungskontrolle in den Stützen durchgeführt. Hierzu wird aus der Querkraft in jeder Stütze die Schubspannung in der jeweiligen Stütze in Abhängigkeit der Geometriebedingungen berechnet. Diese Werte werden mit der mittleren allgemein üblichen zulässigen Schubspannung verglichen. Die zulässigen Spannungen sind in dem Computer wiederum in einer Tabelle hinterlegt, abhängig von dem verwendeten Material. Bei den zulässigen Spannungen wird vorzugsweise mit einer hohen Sicherheit gerechnet, da die Qualität des verwendeten Materials, d. h. beispielsweise die Qualität des Stahls oder des Stahlbetons nicht exakt bekannt ist. Der Vergleich führt wiederum zu einer Bewertung "positiv" oder "negativ". Diese Bewertung wird wiederum zwischengespeichert.

Im nächsten Schritt j) wird eine Schubspannungskontrolle der Wände durchgeführt. Hierzu wird aus der jeweiligen Stockwerksquerkraft die Schubspannung in den Wänden berechnet:

$$\text{Schubspannung} = \frac{\text{Stockwerksquerkraft}}{\text{Summe aller Querschnittsflächen der lateral aussteifenden Wände}} \qquad \text{(Gl. 9)}$$

Dieser Wert wird mit einer zulässigen Schubspannung verglichen. Diese ist entsprechend der zulässigen Spannung bei der Ermittlung in Schritt i), in einer entsprechenden Tabelle hinterlegt, wobei wiederum mit einer hohen Sicherheit gerechnet wird, da die exakte Qualität des Materials nicht bekannt ist. Das Bewertungsergebnis wird zwischengespeichert.

Als letzte Bauwerksüberprüfungsberechnung erfolgt in Schritt k) die Kontrolle der diagonalen Aussteifungen. Hierzu werden die Zug-/ Druckspannungen in den Aussteifungen berechnet und anschließend mit den zulässigen Werten vergleichen:

$$\text{Zug-/ Druck Spannung} = \frac{\text{Stockerksquerkraft}}{\text{Gesamtquerfläche der Aussteifungen}} \cdot \frac{\text{mittlere Länge der Aussteifungen}}{\text{mittlerer Abstand der Stützen}}$$

(Gl. 10)

Bei Aussteifungen handelt es sich um, im Allgemeinen schräg zwischen Bauwerkstützen verlaufenden Trägern.

Das Ergebnis dieser Berechnung wird wiederum mit zulässigen Werten, die in einer Tabelle hinterlegt sind, verglichen. Der Vergleich führt wiederum zu einer Bewertung "positiv" oder "negativ". Diese Bewertung wird wiederum zwischengespeichert.

Aus den Bauwerksüberprüfungsberechnungen in den Schritten g) bis k) ist jeweils ein Ergebnis "positiv" oder "negativ" bekannt und im Computer gespeichert.

Im nächsten Schritt l) werden die in den Schritten g) bis k) durchgeführten Bauwerksüberprüfungsberechnungen ausgewertet. Die Bewertung führt dazu, dass von der Basispunktzahl ein Bauwerks-Strukturwert subtrahiert oder addiert wird. Vorzugsweise erfolgt dies dadurch, dass ein Wert hinzuaddiert wird, wenn sämtliche Bauwerksüberprüfungsberechnungen "positiv" waren. Sobald eine der Bauwerksüberprüfungsberechnungen "negativ" ist, bleibt die Basispunktzahl, die ggf. bereits im Schritt e), aufgrund der auftretenden Eigenfrequenzen verändert wurde, im Schritt l) unverändert. Es ist ebenso möglich, nach jedem einzelnen der Schritte g) bis k) eine Veränderung der Basispunktzahl vorzunehmen. Anstelle des Subtrahierens oder Addierens fester Werte können auch Faktoren eingeführt werden, mit denen die Basispunktzahl multipliziert wird.

Auf Grundlage des Ergebnisses der Berechnungen ergibt sich eine Bewertungsgröße. Diese setzt sich aus der Basispunktzahl mit den entsprechenden subtrahierten oder addierten Werten aus den Berechnungen in den Schritten e) und l) zusammen.

In dem Schritt m) erfolgt eine Berechnung der Versagungswahrscheinlichkeit. Dies ist die Wahrscheinlichkeit dafür, dass das Gebäude bei einem Erdbeben in Abhängigkeit der Erdbebenintensität vollständig zerstört wird, wobei unter vollständiger Zerstörung eine zumindest wirtschaftlich vollständige Zerstörung zu verstehen ist, so dass es nicht lukrativ ist, das Gebäude zu renovieren. Die Berechnung der Versagungswahrscheinlichkeit erfolgt durch:

$$\text{Bewertungsgröße des Bauwerks} = -\log\ (\text{Versagungswahrscheinlichkeit})$$

$$(\text{Gl. } 11)$$

Parallel zu dem Schritt m) wird in einem Schritt n) eine mittlere Schädigung in Abhängigkeit der Erdbebenintensität berechnet. Es handelt sich hierbei um einen Prozentwert einer Schädigung bei einem beispielsweise schwachen mittleren oder starken Erdbeben. Die einzelnen Zahlenwerte erlauben eine Abschätzung des Grades der Schädigung eines Bauwerks bei einem entsprechenden Erdbeben. Die Berechnung der Schädigung erfolgt durch eine mathematische Approximation der logarithmischen Normalverteilung. Die Fläche unter der Schädigungsverteilung der mittleren Schadenswahrscheinlichkeit von 60 % bis 100 % entspricht der Wahrscheinlichkeit einer Schädigung von über 60 %. Die Berechnung der mittleren Schädigungswahrscheinlichkeit q erfolgt durch

$$\text{Bewertungsgröße des Bauwerks} = -\ \frac{\ln\ (q)}{\ln\ (10)}\ , \qquad\qquad (\text{Gl. } 12)$$

wobei

$$q = (b_1 \cdot t + b_2 \cdot t^2 + b_3 \cdot t^3 + b_4 \cdot t^4 + b_5 \cdot t^5) \cdot Z\,x;$$

$$Z\,x = 0{,}39894228^{(-x^2 \cdot \frac{1}{2})};$$

$$t = \frac{1}{(1 + p \cdot X)}$$

und

$$X = \frac{(\ln\ (60) - \ln\ (x_m))}{S}$$

ist.

Hierin ist

$x_m$ der Mittelwert der logarithmisch-normalen-Schädigungsverteilung,

s die Standardabweichung der logarithmisch-normalen-Schädigungsverteilung,

$b_1$ = 0.31938153

$b_2$ = -0.356563782

$b_3$ = 1.781477937

$b_4$ = -1.821255978

$b_5$ = 1.330274429

p = 0.2316419

Gemäß der Erfindung ist es nicht erforderlich sämtliche Schritte a) bis m) bzw. n) durchzuführen. Die wesentlichen Schritte sind die Schritte c), d) und e), auf Grundlage derer sich bereits ein Ergebnis hinsichtlich der Erdbebensicherheit eines Bauwerks ableiten lässt. So ist es beispielsweise möglich unmittelbar nach dem Schritt e) den Schritt m) oder n) durchzuführen. Ebenso können einzelne Schritte, in denen eine Bauwerksüberprüfungsberechnung durchgeführt wird, d. h. einer oder mehrere der Schritte g) bis k) entfallen. Ferner ist eine Kombination sowie eine Gewichtung dieser einzelnen Schritte möglich. Da vorzugsweise eine Veränderung der Basispunktzahl durch Addieren oder Subtrahieren erfolgt, ist die Reihenfolge der einzelnen Schritte vertauschbar.

Beispielsweise erfolgt eine einfache Berechnung bei einem Stahlrahmenbauwerk folgendermaßen:

Ein Stahlrahmenbauwerk hat bei einem Standort mit hoher Erdbebenintensität eine Basispunktzahl von 4,5. Wenn es sich um einen weichen Boden mit weichen bis harten Toneinlagerungen in einer Tiefe von etwa 10 m handelt, wird als Boden-Risikowert 0,6 subtrahiert, so dass die Basispunktzahl bereits nach dem Schritt b) auf 3,9 gesunken ist. Nach der Bestimmung der Eigenfrequenzen des Bodens und des Gebäudes findet im Schritt e) eine Auswertung der Eigenfrequenzen statt. Ist diese Auswertung größer als 15 %, so wird von der bereits reduzierten Basispunktzahl der Wert 0,8 subtrahiert. Ist der Wert nach Vergleich der Eigenfrequenzen nicht größer 15 % bleibt die Bewertungsgröße, d. h. die bereits reduzierte Basispunktzahl unverändert. Anschließend werden in den Schritten g) bis k) die Bauwerksüberprüfungsberechnungen durchgeführt. Sind sämtliche Bauwerksüberprüfungsberechnungen "positiv", wird der Wert um 2 erhöht. Sobald eine Berechnung "negativ" ist, bleibt der Wert unverändert. Ist der Vergleichswert der Eigenfrequenzen größer als 15 % und zumindest eine Bauwerksüberprüfungsberechnung "negativ", ergibt sich somit ein Wert von 3,7. Hieraus berechnet sich die Versagungswahrscheinlichkeit zu $10^{-3,7}$. Die Versagungswahrscheinlichkeit beträgt somit 0,02 %.

Bei einer Bewertungsgröße von 3,7 ergibt sich sodann nach Gl. 12 eine mittlere Schädigung von 15 %.

**Patentansprüche**

1. Verfahren zur Bestimmung der Erdbebensicherheit von Bauwerken mit den Schritten

   Bestimmen der Eigenfrequenz des Bauwerks;

   Bestimmen der Eigenfrequenz des Bodens und

   Berechnen einer Bewertungsgröße für das Bauwerk auf der Grundlage eines Vergleichs der Bauwerkseigenfrequenz mit der Bodeneigenfrequenz.

2. Verfahren nach Anspruch 1, bei welchem die Bauwerkseigenfrequenz bestimmt wird,

   indem eine exzentrisch gelagerte Masse einer Erregungsvorrichtung mit zunehmender Drehzahl rotiert wird und dadurch das Bauwerk zu Schwingungen anregt,

die Schwingungen des Bauwerks mittels eines Beschleunigungsaufnehmers aufgenommen werden und

die Eigenfrequenz des Bauwerks anhand des Spektrums der aufgenommenen Schwingungen bestimmt wird.

**3.** Verfahren nach Anspruch 2, bei welchem die Erregungsvorrichtung oberhalb von $^9/_{10}$ der Gesamthöhe des Bauwerks an diesem befestigt wird.

**4.** Verfahren nach einem der Ansprüche 1 - 3, bei welchem zur Berechnung der Bewertungsgröße eine bauwerksspezifische Basispunktzahl aus einer hinterlegten Bauwerkstabelle entnommen wird.

**5.** Verfahren nach einem der Ansprüche 1 - 3, bei welchem die Bewertungsgröße in Abhängigkeit des Frequenzabstandes zwischen der Bauwerkseigenfrequenz und der Bodeneigenfrequenz berechnet wird.

**6.** Verfahren nach Anspruch 4 oder 5, bei welchem die Basispunktzahl um einen bauwerksspezifischen Frequenz-Risikowert verringert wird, wenn

$$\frac{\text{Bauwerkseigenfrequenz - Bodeneigenfrequenz}}{\text{Bauwerkseigenfrequenz}}$$

größer als eine bauwerksspezifische Grenzwert ist.

**7.** Verfahren nach einem der Ansprüche 4 - 6, bei welchem die Basispunktzahl in Abhängigkeit der Bodenbeschaffenheit um einen Boden-Risikowert verringert wird.

**8.** Verfahren nach einem der Ansprüche 4 - 7, bei welchem zusätzlich ein oder mehrere Bauwerksüberprüfungsberechnungen durchgeführt werden und die Basispunktzahl in Abhängigkeit des Berechnungsergebnisses um einen Bauwerks-Strukturwert verändert wird.

**9.** Verfahren nach Anspruch 8, bei welchem jede Bauwerksüberprüfungsberechnung in Abhängigkeit eines Grenzwertes als positiv oder negativ bewertet wird und die Basiszahl erhöht wird, wenn alle Bauwerksüberprüfungsberechnungen als positiv bewertet wurden.

**10.** Verfahren nach Anspruch 9, bei welchem Bauwerkskriterien festgelegt werden und die Basiszahl nur erhöht wird, wenn sämtliche Bauwerkskriterien positiv sind.

**11.** Verfahren nach einem der Ansprüche 1 - 10, bei welchem ein mittleres Schadensmaß auf Grundlage der Bewertungsgröße in Abhängigkeit der Erdbebenstärke berechnet wird.

**12.** Verfahren nach einem der Ansprüche 1 - 11, bei welchem eine Berechnung einer Versagungswahrscheinlichkeit aufgrund der Bewertungsgröße erfolgt.

a) | Eingabe / Abfrage bauwerksspezifischer Daten |

b) | Eingabe / Abfrage bodenspezifischer Daten |

c) | Ermittlung der Bauwerkseigenfrequenz |

d) | Ermittlung der Bodeneigenfrequenz |

e) | Auswertung der Eigenfrequenzen |

f) | Berechnung der Erdbebenersatzkräfte |

g) | Berechnung der Kippsicherheit |

FIG. 1 a

h) Verformungskontrolle

i) Schubspannungskontrolle der Stützen

j) Schubspannungskontrolle der Wände

k) Kontrolle der Aussteifung

l) Auswertung der Bauwerksüberprüfungsberechnungen

m) Berechnung Versagungswahrscheinlichkeit

n) Berechnung Mittlere Schädigung

FIG. 1 b

FIG. 2

FIG.3

FIG.4

Europäisches
Patentamt

**EUROPÄISCHER RECHERCHENBERICHT**

Nummer der Anmeldung

EP 00 11 8055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | BARGIGIA A ET AL: "AN IN PROGRESS EXPERIENCE ON SEISMIC QUALIFICATION OF GAS INSULATED SUBSTATIONS" IEEE TRANSACTIONS ON POWER DELIVERY,US,IEEE INC. NEW YORK, Bd. 8, Nr. 1, 1993, Seiten 132-138, XP000331922 ISSN: 0885-8977 | 1,5 | E02D33/00 G01M7/00 |
| A | * Seite 132, linke Spalte, Zeile 1 - Seite 137, linke Spalte, Zeile 17 * | 7 | |
| Y | MCKAIN: "EXCUSES ON SHAKY GROUND" INTERNATIONAL CONSTRUCTION,GB,REED BUSINESS PUBLISHING. SUTTON, Bd. 29, Nr. 3, 1. März 1990 (1990-03-01), Seiten 40-41, XP000114333 ISSN: 0020-6415 | 1,5 | |
| A | * Seite 40, rechte Spalte, Zeile 1 - Seite 41, rechte Spalte, Zeile 11 * | 7 | |
| A | PATENT ABSTRACTS OF JAPAN vol. 1998, no. 10, 31. August 1998 (1998-08-31) & JP 10 142112 A (OHBAYASHI CORP), 29. Mai 1998 (1998-05-29) * Zusammenfassung * | 1,4,8 | RECHERCHIERTE SACHGEBIETE (Int.Cl.7) E02D G01M |
| A | FR 2 289 253 A (CENTRE EXPÉRIMENTAL DE RECHERCHES ET D'ETUDES DU BATIMENT) 28. Mai 1976 (1976-05-28) * Seite 3, Zeile 1-16 * | 2,3 | |

Der vorliegende Recherchenbericht wurde für alle Patentansprüche erstellt

| Recherchenort | Abschlußdatum der Recherche | Prüfer |
|---|---|---|
| DEN HAAG | 23. Januar 2001 | Kergueno, J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 11 8055

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2001

| Im Recherchenbericht angeführtes Patentdokument | Datum der Veröffentlichung | Mitglied(er) der Patentfamilie | Datum der Veröffentlichung |
|---|---|---|---|
| JP 10142112 A | 29-05-1998 | KEINE | |
| FR 2289253 A | 28-05-1976 | KEINE | |

Für nähere Einzelheiten zu diesem Anhang : siehe Amtsblatt des Europäischen Patentamts, Nr.12/82